# EUROPEAN PATENT APPLICATION

(11) **EP 0 798 792 A1**
(43) Date of publication of application: **01.10.1997**
(21) Application number: 97302111.6
(22) Date of filing: 26.03.1997
(51) Int. Cl.: H01M 2/10, H01M 2/04, B60R 16/04

(54) **Battery lid**

(30) Priority: 27.03.1996 GB 9606421
(71) Applicant: Yuasa Automotive Batteries (Europe) Ltd., Sparkhill, Birmingham B11 3DA (GB)
(72) Inventor: McEwan, Keith John Bruce, Solihull, West Midlands B94 5AR (GB); Peters, David John, Stourbridge DY9 7AZ (GB)
(74) Representative: Carpenter, David

(57) **Abstract**

A battery case lid having a raised central section (14) dimensioned to cooperate with a predetermined narrow battery clamp (15), and being adapted (18) to receive and locate packing means (16) which, when located on the lid (12), increases the relevant dimension of the lid (12) to cooperate with a predetermined wide battery clamp (19). The invention further relates to a lid in combination with packing elements and to a battery case and a battery utilizing such a lid.

## Description

This invention relates to a battery case lid for use in the construction of an electric storage battery, and further resides in a battery case, and a battery, utilizing the battery case lid.

There are two predominant battery types in use as SLI (Starting, Lighting and Ignition) batteries for road vehicles. One of the two types has a raised central section on its top face (the so-called 'European' type), while the other has a substantially flat top face. In addition there is a growing trend towards the use of a battery clamp having a member engaging the top face of the battery and secured to the vehicle body to clamp the battery in place. Thus two clamp types are required as original equipment in vehicles, a narrow clamp which is fitted where the battery has a raised central section, and a wide clamp which is fitted to the vehicle where the battery has a substantially flat top face.

While vehicle manufacturers can accommodate the two battery types, and the selection of appropriate clamps, there is more of a problem in the after-market, that is to say the supply of replacement batteries, since it is expensive and inconvenient to supply and stock two different battery types in a range of amp/hour ratings simply to be able to match the clamp type of the vehicle whose battery is being replaced. Accordingly, it is an object of the present invention to facilitate the use of a single battery type capable of being clamped by either a wide, or a narrow, battery clamp.

In accordance with a first aspect of the present invention there is provided a battery case lid having a raised central section dimensioned to cooperate with a predetermined narrow battery clamp, and being adapted to receive and locate packing means which, when located on the lid, increases the relevant dimension of the lid to cooperate with a predetermined wide battery clamp.

Preferably said packing means and said lid include interlocking formations permitting the packing means to be engaged with the lid as a removable, push-fit.

Preferably said packing means comprises first and second packing elements, and the lid is adapted to receive and locate said first and second elements at opposite edges respectively of the raised centre section.

Desirably said first and second elements are identical.

Conveniently said raised central section of said lid is formed, adjacent one edge, with a groove extending transverse to the direction in which the lid is spanned in use by said clamp, said groove, in use, receiving part of a hinged carrying handle in the inoperative position of the handle, and the region of the raised central section at one side of the groove defining a wall which accepts clamping loading in use and thus protects the handle against said clamping loading.

Preferably said wall and an adjacent part of the raised central section, adjacent each end of said groove, are provided with formations for receiving, as a push-fit, mating formations of terminal covers.

In accordance with a second aspect of the present invention there is provided a battery case lid as defined above, and packing means removably located on said lid.

In accordance with a third aspect of the present invention there is provided a battery case utilizing a battery case lid as defined above.

In accordance with a fourth aspect of the present invention there is provided an electric storage battery utilizing a battery case lid as defined above.

In the accompanying drawings:-
Figure 1 is a diagrammatic perspective view of an SLI electric storage battery in accordance with a first example of the present invention;
Figure 2 is a diagrammatic end view of the lid of the battery illustrated in Figure 1 with packing means thereof omitted and illustrating the cooperation between the lid and a narrow battery clamp;
Figure 3 is a view similar to Figure 2 but illustrating the packing means in place, and the cooperation of the lid with a wide battery clamp;
Figure 4 is a diagrammatic plan view, partly exploded, of the battery of Figure 1 with the handle and terminal covers omitted;
Figure 5 is a view in the direction of arrow A in Figure 4, partly in cross-section; and
Figure 6 is a plan view of the handle of the battery illustrated in Figure 1.

Referring to the drawings, the electric storage battery is intended for use as an SLI battery for a road vehicle, and comprises a moulded polypropylene battery case consisting of a box 11 closed by a lid 12 which, in use, is heat sealed to the box 11. As is conventional, battery plate packs and electrolyte are contained within the battery case and positive and negative battery terminals 13 protrude upwardly from the lid 12 adjacent opposite ends thereof. The lid is formed with a raised central section 14 generally in the shape of a letter 'T' the cross member 14a of which extends along substantially the whole length of the battery adjacent one long edge thereof. The leg 14b of the 'T' extends partway across the width dimension of the lid 12 passing between the terminals 13.

Conventionally the battery case will be divided internally into six compartments each housing a battery plate pack and electrolyte, the battery plate packs being electrically connected in series between the terminals 13. During manufacture of the battery access to the internal compartments for introduction of electrolyte is achieved by way of respective apertures in the cross member 14a of the raised central section, these apertures being closed in use by appropriate plugs. In most batteries the plugs will be sealed in place to provide a 'sealed-for-life' battery, although there may be occasions where the plugs will be arranged to be removable to facilitate service of the battery.

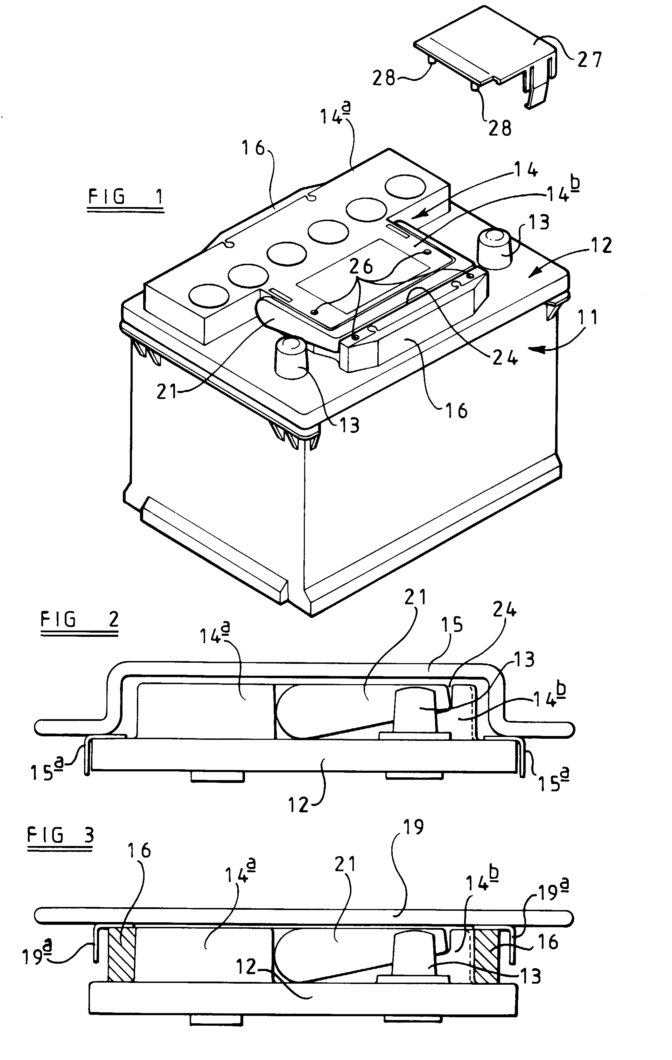

The lid of the conventional 'European' type battery has a central raised section the external dimensions of which are identical to the external dimensions of the section 14 of the present battery. Thus the present battery can be used with the so-called narrow battery clamp designed for use with the conventional 'European' type battery. By comparison, the conventional flat topped battery has a greater width dimension than the width dimension of the raised central section of the conventional 'European' type battery and thus dictates the use of a so-called wide battery clamp. The narrow and wide battery clamps are illustrated in Figures 2 and 3 respectively and will be discussed in more detail hereinafter.

It is clear that the present battery can be used with a narrow battery clamp, and in order that the present battery can also be used with a wide battery clamp, if the vehicle to which the battery is being fitted is equipped with the wide battery clamp, there is provided packing means in the form of first and second packing elements 16 for extending the width dimension of the raised central region 14 of the battery. The first and second elements 16 are identical, each being in the form of a one-piece polypropylene moulding. The elements 16 may, if desired, be made hollow to save material, but substantially rigid by virtue of a structure of internal ribs, and each has a height dimension equal to the height of the upper surface of the raised central section 14 above the remainder of the lid 12. Conveniently the length of each element 16 is equal to the width of the free end surface of the leg 14b of the T-shaped section 14, but this is not essential. The same element 16 could be used in conjunction with a battery of larger dimensions such that the length of the element 16 would be less than the width of the leg 14b. It is desirable to ensure that the length of the element is not less than the equivalent dimension of the mating clamp.

Each element 16 is formed integrally with a spaced pair of lugs 17 protruding from one face of the element. Each lug 17 is in the form of a short cylindrical post joined to the remainder of the element 16 by a narrow integral web. Adjacent its free end the leg 14b of the raised section 14 of the lid is formed with a pair of recesses 18 for receiving the lugs 17 of one of the elements 16. The cross member 14a of the section 14, adjacent its edge, is formed with a similar pair of recesses 18 to receive the lugs of the second element 16. It will be recognised therefore that when the first and second elements 16 are fitted to the front and rear edges respectively of the raised section 14 they increase the width dimension of the raised section 14, on both sides of its longitudinal centre-line, to match the equivalent dimension of the conventional flat topped battery and thus permit the battery of the present invention to cooperate with a wide battery clamp.

Figure 2 illustrates the battery of Figure 1 cooperating with a narrow battery clamp 15, there being no elements 16 cooperating with the raised section 14. Thus it can be seen that the narrow battery clamp 15 consist of an elongate rigid strap which extends across the width dimension of the battery and is bent to define a raised portion for receiving the raised section 14 of the battery lid. The strap 15 extends downwardly on opposite sides of the raised section 14 and is fitted with load spreading members 15a of L-shaped cross-section which engage the front and rear edges of the periphery of the lid 12 to apply the clamping load thereto. The strap of the clamp 15 projects beyond the front and rear edges of the lid 12 to be coupled to the bodywork of the vehicle so as to clamp the battery in place.

Figure 3 shows the battery of Figure 1 with the first and second elements 16 in place, extending the width dimension of the section 14 to match that of a conventional flat topped battery. The battery clamp 19 illustrated in Figure 3 is a wide battery clamp and comprises a rectilinear rigid strap having load spreading members 19a of L-shaped cross-section which engage over the edges of the elements 16, the ends of the strap protruding beyond the periphery of the battery for securing to the body of the vehicle to clamp the battery in place.

The battery is provided with a hinged carrying handle 21 of rectangular U-shaped configuration, the parallel limbs of the handle being provided, adjacent their free ends, with inwardly projecting lugs 22. The handle is moulded in polypropylene and the spacing between the parallel limbs of the handle is equal to the width of the leg 14b of the raised section 14 of the lid. Opposite vertical faces of the leg 14b are formed with apertures 23 for receiving the lugs 22 so as hingeably to couple the handle to the lid. Assembly of the handle to the lid is achieved by flexing the parallel limbs of the handle away from one another and then aligning the lugs 22 with the apertures 23 and permitting the resilience of the handle to restore the handle to its original configuration so that the lugs 22 enter the apertures 23. The length of the parallel limbs of the handle is less than the length of the leg 14b between the apertures 23 and its free end, and thus in order to accommodate the cross member of the handle 21 in the inoperative position of the handle, the leg 14b of the raised section 14 is moulded with a transverse groove 24. The depth of the groove 24 is such that the handle can be hinged to an inoperative position in which it is flush with, or slightly below, the top surface of the section 14 and thus does not obstruct fitting of the battery clamp. The handle is arranged to be hingeable relative to the lid 12 through approximately 90° from its inoperative position so that in its operative position the handle 21 is extending vertically upwardly from the lid.

The lugs 22 have enlarged regions at their free ends which are received within corresponding enlarged regions in the lid. Moreover, the lugs 22 are not circular in cross-section and the apertures 23 are correspondingly shaped such that the lugs 22 can only be introduced into the apertures 23 when the handle is in, or close to, its inoperative position. Thus when the handle is moved to its operative position coaction between the enlarged regions of the lugs 22 and the corresponding regions within the lid prevent withdrawal of the lugs 22 from the apertures 23 thereby resisting any tendency for the parallel limbs of the handle to be flexed apart, disengaging the handle from the lid, during use.

It will be recognised that the groove 24 partially divides the leg 14b thus defining an upstanding wall 25 at the free end of the leg 14b. It is the wall 25 which is formed with the recesses 18 and thus it is the wall 18 which supports the element 16, thereby ensuring that clamping load from the clamping strap 15 or 19 is not applied to the handle 21. It is considered to be important to protect the handle from the clamping load to avoid the risk of inadvertent damage to the handle.

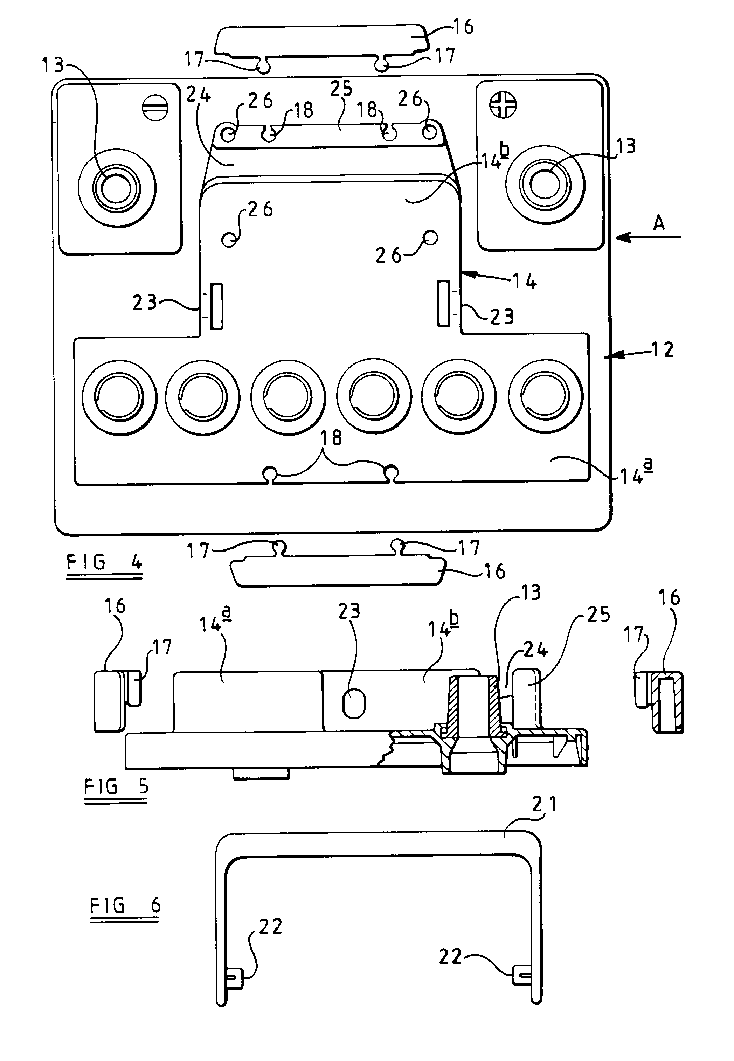

As best seen in Figures 1 and 4 both ends of the wall 25, and corresponding adjacent regions of the main portion of the leg 14b, are formed with cylindrical recesses 26 open at the upper face of the raised section 14. Thus one pair of recesses is positioned generally adjacent each terminal 13, and the recesses serve to receive posts 28 extending downwardly from moulded terminal covers 27 as a push-fit, to retain the covers in position over their respective terminals 13. It will be noted that only one of the covers is shown in Figure 1, but that the other cover will be a mirror image thereof.

Where the battery is being used as a replacement for a existing battery then the covers 27 of the existing battery may be transferred to the present battery. However, it is envisaged that a pair of covers 27 may be provided with the battery or may be sold as an accessory to accommodate situations where the battery being replaced does not have covers.

It will be recognised that the elements 16 can be supplied with the battery, either fitted (to be removed if not required), or as separate components to be fitted by the user. As an alternative of course a stockist could hold a stock of elements 16 for supply as an accessory where the user recognises that his vehicle has a wide battery clamp.

It will be noted that the shaping of the free end of the leg 14b of the raised section 14 in Figure 4 differs slightly from that illustrated in Figure 1. The difference is fundamentally a styling difference and has no functional significance. Moreover although the use of lugs 17 and recesses 18 is the preferred manner of receiving and locating the elements 16 on the lid, alternative interlocking configurations could be provided if desired.

## Claims

1. A battery case lid having a raised central section (14) dimensioned to cooperate with a predetermined narrow battery clamp (15), and characterised by being adapted (18) to receive and locate packing means (16) which, when located on the lid (12), increases the relevant dimension of the lid (12) to cooperate with a predetermined wide battery clamp (19).

2. A battery case lid having a raised central section (14) dimensioned to cooperate with a predetermined narrow battery clamp (15), and characterised by packing means (16) located on the lid (12) and increasing the relevant dimension of the lid (12) to cooperate with a predetermined wide battery clamp (19).

3. A battery case lid as claimed in Claim 1 or Claim 2, characterised in that said packing means (16) and said lid (12) include interlocking formations (17,18) permitting the packing means (16) to be engaged with the lid (12) as a removable, push-fit.

4. A battery case lid as claimed in any one of Claims 1 to 3, characterised by being adapted to receive and locate first and second elements of said packing means (16) at opposite edges respectively of the raised centre section (14).

5. A battery case lid (12) as claimed in Claim 4 where dependent on Claim 2 and characterised in that said first and second elements (16) are identical.

6. A battery case lid as claimed in any one of the preceding claims, characterised in that said raised central section (14) of said lid (12) is formed, adjacent one edge, with a groove (24) extending transverse to the direction in which the lid (12) is spanned in use by said clamp, said groove, in use, receiving part of a hinged carrying handle (21) in the inoperative position of the handle, and the region of the raised central section (14) at one side of the groove defining a wall (25) which accepts clamping loading in use and thus protects the handle (21) against said clamping loading.

7. A battery case lid as claimed in Claim 6, characterised in that said wall (25) and an adjacent part of the raised central section (14), adjacent each end of said groove (24), are provided with formations (26) for receiving, as a push-fit, mating formations (28) of terminal covers (27).

8. A battery case characterised by utilizing a battery case lid (12) as claimed in any one of the preceding claims.

9. An electric storage battery characterised by utilizing a battery case lid (12) as claimed in any one of the preceding claims.
